# EUROPEAN PATENT APPLICATION

(11) **EP 1 345 302 A1**
(43) Date of publication of application: **17.09.2003**
(21) Application number: 03447051.8
(22) Date of filing: 12.03.2003
(51) Int. Cl.: H02G 3/04

(54) **Cable trough capable of supporting a person and comprising a top profile snap-fitted on the bottom profile**

(30) Priority: 12.03.2002 BE 200200175
(71) Applicant: Vergokan, 9700 Oudenaarde (BE)
(72) Inventor: Verlé, Ludwig, . (BE)
(74) Representative: Luys, Marie-José A.H.

(57) **Abstract**

A cable trough comprising a first profile (2) with a first open side which is provided to be mounted on a second profile (1) with a second open side, the first profile comprising a converging portion (21), which converges towards the first open side, and the second profile comprising a diverging portion (11), which diverges towards the second open side, the converging portion (21) being provided to engage around the diverging portion (11), the first and/or second profiles being constructed according to predetermined design parameters which are chosen such that the profiles have sufficient resiliency at the converging and/or diverging portions for enabling the converging portion (21) of the first profile (2) to be snap-fitted over the diverging portion (11) of the second profile (1) and that the first and second profiles have sufficient rigidity for supporting a person.

## Description

The present invention relates to a cable trough according to the preamble of the first claim.

Cable troughs which comprise a top profile snap-fitted on a bottom profile are known in the art. Due to the required resiliency for enabling the snap-fitting of the profiles, the construction of the known cable troughs is relatively weak, so that the known cable troughs are unsuitable for supporting weights.

Other, more rigid cable troughs with top and bottom profiles are known in the art, which are capable of supporting larger weights. The construction of the bottom and top profiles of these cable troughs is aimed at achieving a high rigidity, so that the profiles have insufficient resiliency for enabling a snap-fitted coupling of the top and bottom profiles. The top profile of these cable troughs is fixed to the bottom profile by additional fixing means such as bolts or clamps.

It is an aim of the invention to provide a cable trough with snap-fitted profiles which is capable of supporting a person.

This aim is achieved according to the invention in that the cable trough comprises the technical characteristics of the characterising part of claim 1.

The cable trough of the invention comprises two profiles, each having an open side and one being provided to be snap-fitted on the other. To this end, the one profile comprises a converging portion, i.e. a portion where the profile converges towards its open side, and the other profile comprises a diverging portion, i.e. a portion where the profile diverges towards its open side. The profiles are mounted on each other by placing the converging portion of the one profile over the diverging portion of the other profile. In order to enable this snap-fitting, the profiles are constructed according to well-chosen design parameters. These design parameters are chosen such that the resiliency of one or both profiles at the converging and/or diverging portions is sufficient for enabling the snap-fitting of the profiles on each other. According to the invention, these design parameters are furthermore chosen such that the two profiles have sufficient rigidity for supporting a person.

In order to construct a profile for a cable trough which has a specified resiliency at a given location, a part of the rigidity of the profile is sacrificed. On the other hand, a higher rigidity of the profile goes at the expense of its resiliency. As a result, the person skilled in the art cannot arrive at the invention by simply increasing the rigidity of the known cable troughs which are formed by snap-fitted profiles or by increasing the resiliency of known cable troughs which are formed by rigid profiles which are fixed to each other by additional fixing means. The design of the cable trough of the invention requires technical skill for finding the correct balance between different design parameters, so that snap-fitting of the profiles is enabled simultaneously with sufficient rigidity for withstanding the weight of a person.

The cable trough of the invention has the advantage that a rigid cable trough is achieved which can be installed more quickly, since the use of additional fixing means for the profiles can be avoided. As a result, the invention enable the use of a cable trough comprising snap-fitted profiles as floor cable trough in industrial environments, where it is common that workers walk on the floor cable troughs. Furthermore, the cable trough of the invention has the advantage that, due to the snap-fitting of the profiles, the cable trough can afterwards also be opened more easily if needed, for example for repairing a cable.

The design parameters which are chosen for achieving the resiliency and rigidity may for example comprise one or more of the following: the material(s) in which the profiles is/are constructed, the material thickness of each profile, the dimensions of the profiles and their shape.

Each of the profiles of the cable trough of the invention are preferably constructed in sheet metal of a predetermined material thickness. This material thickness is carefully selected, so that the sheet remains pliable on a plying machine for forming the profile from the sheet metal and simultaneously has sufficient rigidity.

The sheet metal of the first profile is preferably provided with ribs or corrugations or the like, for achieving an anti-sliding surface for workers walking on the cable trough, which are preferably applied by pre-forming the sheet metal in a mould. The material thickness of the sheet metal of the first profile is also chosen such that this pre-forming is not impeded. The ribs make the cable trough of the invention particularly suitable for use as floor cable trough in factories, since factory workers often use floor cable troughs as walking path. The ribbed surface can prevent sliding of the workers, especially since it is not unusual that grease or oil is present on the top surface of a floor cable trough in a factory. The ribs or corrugations also have the advantage that the rigidity of the resulting profile is enhanced, so that the material thickness of the first profile can be reduced with respect to a flat, non-corrugated profile.

The two profiles may both be constructed in the same sheet metal, but they may also be constructed in different metals or other suitable materials and with a different material thickness. Suitable design parameters (material and material thickness) are 1.5 mm sheet steel for the first profile and 2 mm sheet steel for the second profile.

The design parameters of the profiles are preferably chosen such that the snap-fitting of the one on the other can be effected manually and that, once mounted, the first profile is held tensionlessly on the second. The latter means that, as long as the first profile is in position on the second profile, the diverging portion of the second profile is preferably substantially not compressed, as this could lead to undesirable wear of the second profile. This does however not mean that the first profile can be removed from the second profile without force, since the diverging portion has to be compressed for removing the first profile.

In the cable trough of the invention, the first profile with the converging portion is preferably the top profile and the second profile with the diverging portion is preferably the bottom profile. The profiles may however also be switched. The converging and diverging portions are preferably of about the same height, so that a maximum overlap of the top and bottom profiles is achieved and the snap-fitted mounting of the two is as strong as possible.

The sidewalls of the bottom profile preferably comprise lower and upper portions, the upper portions forming the diverging portion of the bottom profile and the lower portions being slightly convergent. This means that a bend is located in the sidewalls of the bottom profile, between the upper and lower portions.

The lower portions preferably have a height which is at least twice that of the upper portions. In this way, the bend in the sidewalls of the bottom profile is closer to the top side than to the bottom side of the bottom profile, so that the distance that the sidewalls have to be pushed towards each other for placing or removing the top profile can be reduced.

The converging portion of the top profile is preferably formed by substantially the whole of the sidewalls of the top profile. These sidewalls and the upper portions of the bottom profile are preferably of substantially equal height for achieving the maximum overlap.

The top profile is preferably provided with holes for accommodating a tool, by means of which the top profile may be more easily removed from the bottom profile.

The invention will be further elucidated by means of the following description and the appended figures.

Figure 1 shows a cross section of a preferred embodiment of the cable trough of the invention.

Figure 2a shows a perspective view of a preferred embodiment of the top profile of the cable trough of the invention.

Figure 2b shows an enlarged portion of figure 2a.

Figures 3a-c show perspective views of alternative embodiments of the bottom profile of the cable trough of the invention.

Figure 4 shows a perspective view of an embodiment of the cable trough of the invention, suitable for use in a corner.

Figure 5 shows a perspective view of a bottom profile of the cable trough of the invention, suitable for sideways connecting other profiles.

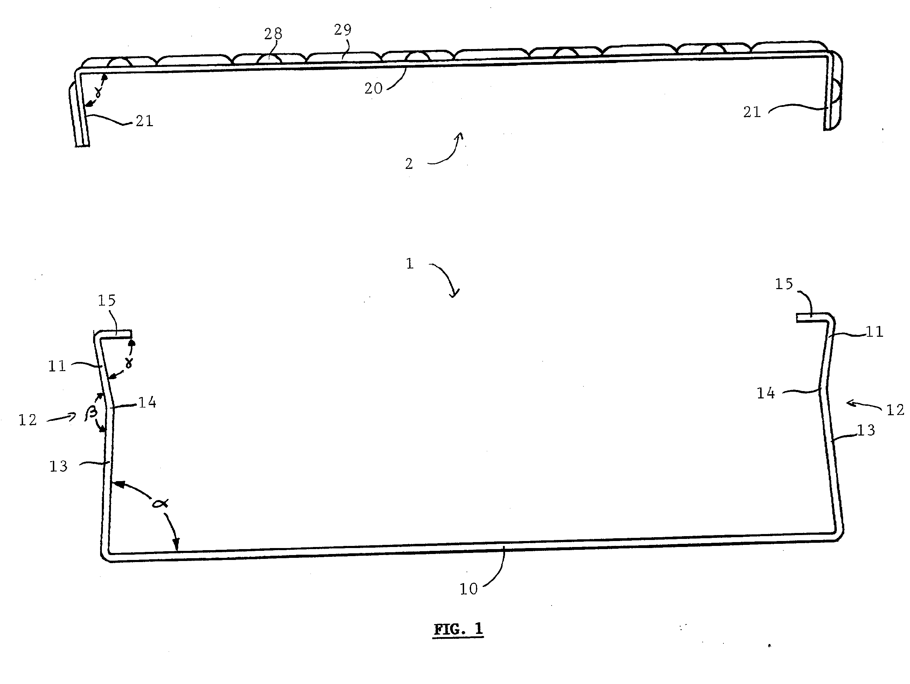

The cable trough shown in figure 1 comprises a bottom profile 1, which is open towards the top, and a top profile 2, which is open towards the bottom. The top profile 2 is intended to be placed on top of the bottom profile 1 for forming a closed space in which cables can be laid. To this end, the bottom profile 1 comprises a diverging portion 11 for engaging in a converging portion 21 of the top profile 2, so that the top profile 2 can be mounted on the bottom profile 1 without the use of bolts or other additional fixing means.

The bottom profile 1 of figure 1 comprises a bottom plate 10 and a pair of upstanding sidewalls 12. The upstanding sidewalls 12 comprise lower portions 13 and upper portions 11, which are divided by a bend 14. The upper portions 11 form the diverging portion of the bottom profile 1, which is provided to engage in the converging portion 21 of the top profile 2. The top edges 15 of the sidewalls 12 are bent parallel with the bottom plate 10, so that they form a support surface for the top profile 2.

The lower portions 13 of the sidewalls 12 of the bottom profile 1 extend in an angle α with respect to the bottom plate 10. In the bend 14, the lower portions 13 of the sidewalls 12 form an angle β with the upper portions 11. The upper portions 11 of the sidewalls 12 extend in and angle y with respect to the top edges 15. The angles α and γ are preferably between 60° and 90° and more preferably between 75° and 90°. α is preferably about 87° and γ is preferably about 80°. The angle β is preferably between 120° and 180°, more preferably between 150° and 180° and most preferably about 167°. The height of the lower portions 13 is preferably at least twice that of the upper portions 11 of the sidewalls. The shape of the bottom profile 1 as described here and shown in figure 1 has been found very suitable for providing sufficient resiliency at the upper portions 11 for enabling placement and removal of the top profile 2 and for achieving sufficient strength for supporting a person.

The bottom profile of figure 1 is constructed in steel plate of for example 2 mm thickness, which is bent to the shape of figure 1 on a plying machine. The width of the bottom profile 1 of figure 1 is about 30 cm, but may also be more or less. The bottom profile 1 may however also be constructed in any other material, with any other thickness and in any other way known to the person skilled in the art.

The top profile 2 of figure 1 comprises a top plate 20 with bent edges 21, which form the converging portion of the top profile 2. The angle γ between the edges 21 and the top plate 20 is about the same as the angle γ between the upper portions 11 and the top edges 15 of the bottom profile 1. The edges 21 of the top profile 2 have substantially the same height as the upper portions 11 of the bottom profile 1, so that a maximum overlap of the top and bottom profiles is achieved and their connection is enhanced.

The top profile 2 is provided with first and second ribs 28 and 29, which protrude outwardly from the top profile, for preventing sliding of a person walking on top of the cable trough. The ribs 28 and 29 also enhance the rigidity of the top profile 2 and its capability to support persons. The first ribs 28 extend in longitudinal direction of the top profile 2, whereas the second ribs 29 extend in cross direction of the top profile 2. The first ribs 28 alternate with the second ribs 29, i.e. two first ribs 28 are separated by a second rib 29 and vice versa. The top profile 2 may however also be provided with any other configuration of ribs which is known to the person skilled in the art. The top profile 2 may furthermore also be provided with other means for preventing sliding of persons.

The top profile of figure 1 is constructed in steel plate of for example 1.5 mm thickness, which is preformed in a mould for applying the ribs 28, 29 and subsequently bent to the shape of figure 1 on a plying machine. The width of the top profile 2 is preferably limited to 30 cm, so that the top profile 2 does substantially not bend upon supporting a person. The top profile 2 may however also be constructed in any other material, with any other thickness and in any other way known to the person skilled in the art. Applying the ribs 28, 29 by performing the steel plate in a mould has the advantage that the preformed, ribbed plate has a substantially uniform material thickness, so that it can be folded to desired shape substantially without the forming of cracks.

The outwardly visible top surface of the top profile 2 is preferably painted in an eye-catching colour, for example yellow or other, for enhancing its visibility. The colour is preferably applied by means of a wear-resistant paint, such as for example a powder lacquer or an epoxy-coating or other.

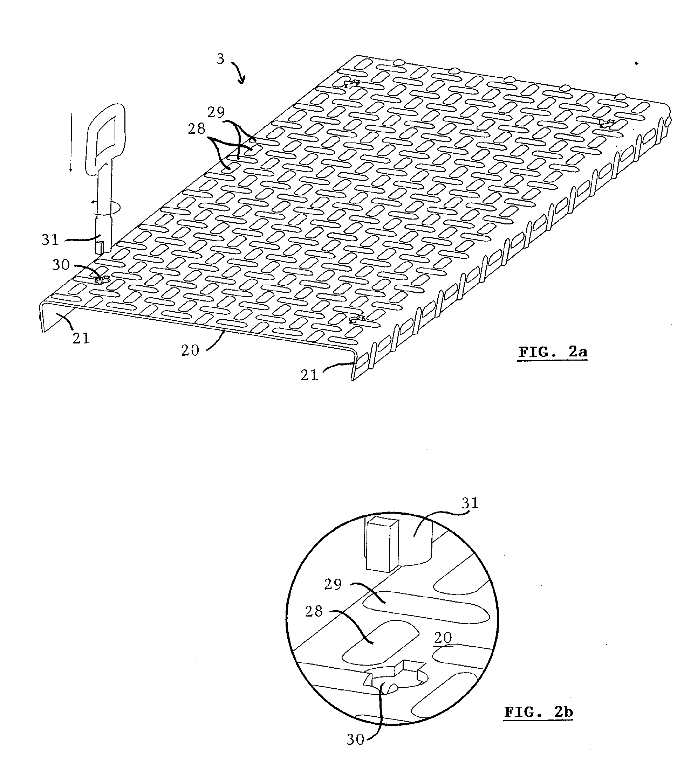

Figures 2a and 2b show a preferred embodiment of the top profile 3, which largely corresponds to the top profile 2 shown in cross section in figure 1 and will therefore not be described in great detail. The top profile 3 is provided with cut-outs 30 for accommodating a tool 31, by means of which the top profile 3 can be removed more easily from the bottom profile 1 if needed.

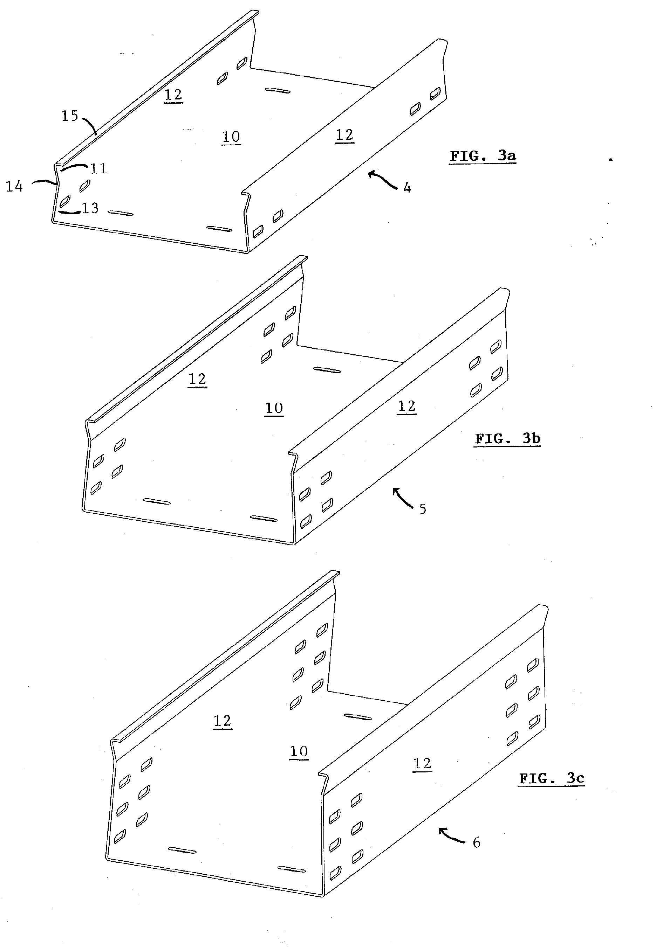

Figures 3a-c show three alternative embodiments of bottom profiles 4, 5 and 6, which largely correspond to the bottom profile 1 shown in cross section in figure 1 and will therefore not be described in great detail. The bottom profiles 4, 5 and 6 differ from each other in the height of the sidewalls 12, more particularly in the height of the lower portions 13 thereof. This shows a further advantage of the cable trough of the invention, namely that the same top profile can be used as cover for bottom profiles of different heights.

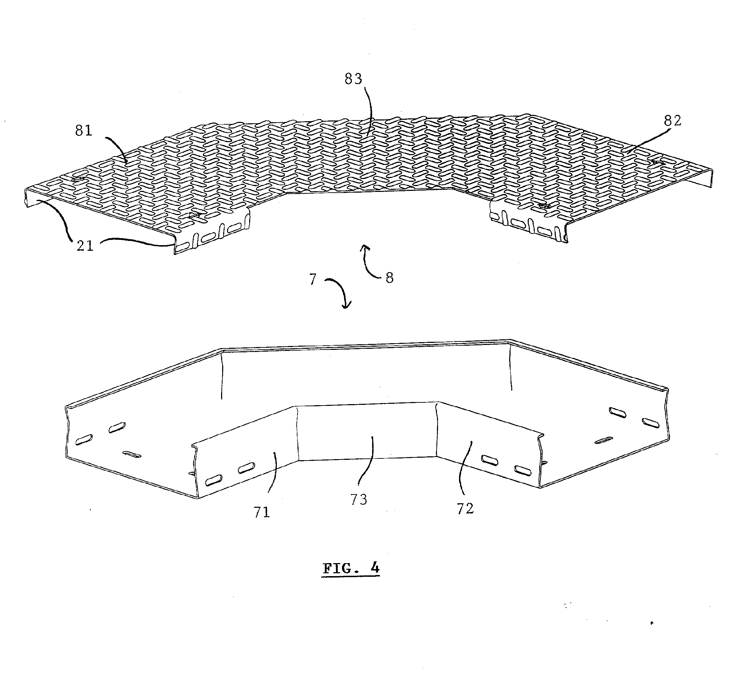

Figure 4 shows an embodiment of a corner element of the cable trough of the invention. The corner element comprises a corner bottom profile 7 and a corner top profile 8. The corner bottom profile 7 is formed by first and second sections 71, 72 which extend in substantially perpendicular directions and an intermediate section 73 between the first and second sections 71, 72. The cross section of the three sections largely corresponds to that of the bottom profile 1 of figure 1. The corner top profile 8 likewise comprises first and second sections 81, 82 which extend in substantially perpendicular directions and an intermediate section 83 between the first and second sections 81, 82. The cross section of the first and second top sections 81, 82 largely corresponds to that of the top profile 2 of figure 1. At the intermediate top section 83, the bent edges 21 are cut away, so that the releasable mounting of the corner top profile 8 on the corner bottom profile 7 can be ensured.

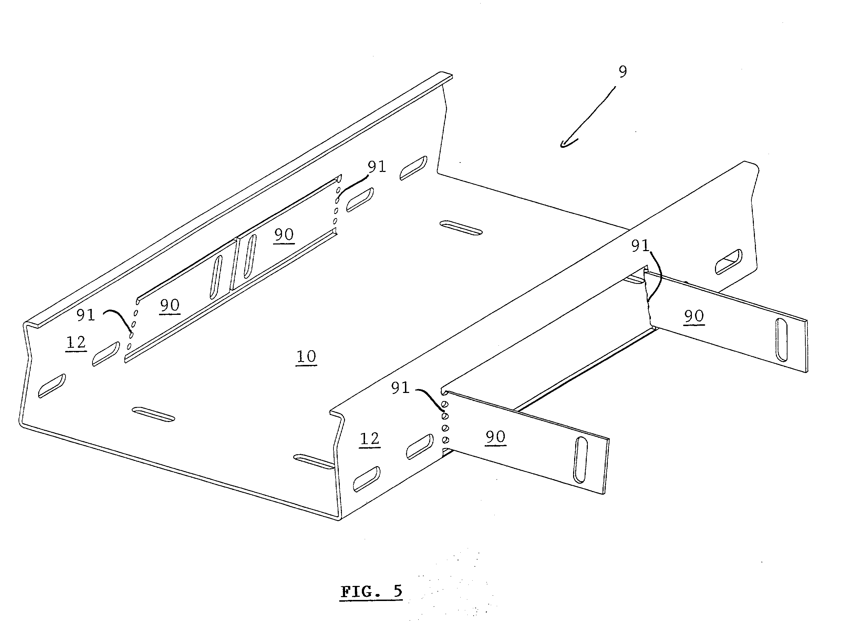

The bottom profile 9 shown in figure 5 is suitable for sideways connecting other profiles, such as for example bottom profiles 4 as shown in figure 3a. The cross section of the bottom profile 9 of figure 5 largely corresponds to that of the bottom profile 1 of figure 1. For the sideways connection, the bottom profile 9 comprises lugs 90, which are cut in the sidewalls 12 of the bottom profile 9 and connected by means of folding lines 91, so that the lugs 90 can be folded outwards for connecting the further profiles.

## Claims

1. A cable trough comprising a first profile (2) with a first open side which is provided to be mounted on a second profile (1) with a second open side, the first profile comprising a converging portion (21), which converges towards the first open side, and the second profile comprising a diverging portion (11), which diverges towards the second open side, the converging portion (21) being provided to engage around the diverging portion (11), the first and/or second profiles being constructed according to predetermined design parameters which are chosen such that the profiles have sufficient resiliency at the converging and/or diverging portions for enabling the converging portion (21) of the first profile (2) to be snap-fitted over the diverging portion (11) of the second profile (1), **characterised in that** the design parameters are further chosen such that the first and second profiles have sufficient rigidity for supporting a person.

2. A cable trough according to claim 1, **characterised in that** for each of the first and second profiles, the design parameters at least comprise the following: material, material thickness, dimensions, shape.

3. A cable trough according to claim 1 or 2, **characterised in that** the first and second profiles are each constructed in sheet metal of a predetermined material thickness, the material thickness of each sheet metal being selected in function of sufficient pliability for forming each profile and sufficient rigidity for supporting a person.

4. A cable trough according to claim 3, **characterised in that** the sheet metal for the first profile comprises ribs or corrugations (28, 29) which are applied by pre-forming the sheet metal in a mould.

5. A cable trough according to claim 3 or 4, **characterised in that** the sheet metal for the first profile (2) has a material thickness of about 1.5 mm and the sheet metal for the second profile (1) has a material thickness of about 2 mm.

6. A cable trough according to any one of the claims 1-5, **characterised in that** the design parameters of the first and/or second profiles are chosen such that the resiliency at the converging and/or diverging portions (21, 11) enables the converging portion (21) of the first profile (2) to be manually snap-fitted on the diverging portion (11) of the second profile (1) and that the first profile (2) is afterwards held in a tensionless manner on the second profile (1).

7. A cable trough according to any one of the claims 1-6, **characterised in that** the first profile is a top profile (2) comprising a top plate (20) with two opposing first sidewalls (21), the first open side being formed by an open bottom side of the top profile and the converging portion being formed by at least part of the first sidewalls, and that the second profile (1) is a bottom profile comprising a bottom plate (10) with two opposing second sidewalls (12), the second open side being formed by an open top side of the bottom profile and the diverging portion being formed by at least part of the second sidewalls, the converging and diverging portions being of substantially equal height.

8. A cable trough according to claim 7, **characterised in that** the second sidewalls (12) of the bottom profile (1) comprise lower and upper portions, the upper portions (11) forming the diverging portion and the lower portions (13) being slightly convergent.

9. A cable trough according to claim 8, **characterised in that** the lower portions (13) have a height which is at least twice that of the upper portions (11).

10. A cable trough according to claim 8 or 9, **characterised in that** the converging portion of the top profile is formed by substantially the whole of the first sidewalls (21) and that these first sidewalls and the upper portions (11) of the bottom profile are of substantially equal height.

11. A cable trough according to any one of the previous claims, **characterised in that** holes (30) are provided for accommodating a tool (31) for removal of the first profile (2) from the second profile (1).
